# EUROPEAN PATENT APPLICATION

(11) **EP 3 975 668 A1**
(43) Date of publication of application: **30.03.2022**
(21) Application number: 21198653.4
(22) Date of filing: 23.09.2021
(51) Int. Cl.: H05B 47/12, H05B 47/19

(54) **APPARATUS FOR CONTROLLING ELECTRICAL AND/OR ELECTRONIC DEVICES AND ASSOCIATED CONFIGURATION METHOD**

(30) Priority: 28.09.2020 IT 202000022765
(71) Applicant: Entity Elettronica S.r.l., 20155 Milano (Milano) (IT)
(72) Inventor: Cavaggion, Stefano, 36050 Sovizzo (Vicenza) (IT)
(74) Representative: Forattini, Amelia

(57) **Abstract**

An apparatus for controlling electrical and/or electronic devices, including a first control device adapted to control the operation of at least one electrical and/or electronic device, the first control device being operatively connected to a Bluetooth^{®} transmitter/receiver adapted to exchange data with a local network, the first control device and the Bluetooth^{®} transmitter/receiver being configured to control the operation of the electrical and/or electronic device on the basis of manual commands given by a user by means of a manual control device connected to the local network. The particularity of the apparatus resides in that it includes a second control device adapted to control the operation of the electrical and/or electronic device, the second control device being operatively connected to a Wi-Fi transmitter/receiver adapted to exchange data with the Internet, the second control device and the Wi-Fi transmitter/receiver being configured to control the operation of the electrical and/or electronic device on the basis of voice commands given by a user by means of a virtual assistant integrated into an artificial intelligence device connected to the Internet.

## Description

The present invention relates to an apparatus for the control of electrical and/or electronic devices and to an associated configuration method, which can be used to manage substantially all domotic devices and in particular smart lighting devices.

As is known, the use of domotic devices, i.e., electrical and/or electronic devices which communicate with each other and are capable of performing in a partially autonomous manner a whole series of functions, is increasingly widespread both in the civil field and in the industrial field.

By means of domotic systems it is possible for example to control the activation of lights and to adjust their brightness, control the motors of electric blinds, manage the operation of conditioning units and boilers, turn on and off electrical household appliances, managing video surveillance and intrusion prevention systems, monitor in real time the consumption of an electrical user device, and much more.

As regards in particular the lighting technology sector, various smart lighting systems are known which allow to control the lights directly from a portable terminal, such as for example a smartphone, with the support of a local network.

Depending on the type of smart lighting that is available, it is in fact possible for example to change the hue or intensity of the lights or to turn on/off multiple lights at once.

In this context, one of the systems that is perhaps most widespread is the one known commercially by the name CASAMBI^{®}, a control system constituted by a hardware platform which is implemented by means of an adapted application.

Lighting control systems of this type provide substantially for the use of a series of lighting elements connected in a network to each other according to the IEEE 802.15 standard, better known as Bluetooth^{®}.

In this manner, the lighting elements can be controlled both by means of suitable electrical control devices and by means of specific applications loaded on personal computers, smartphones, or other types of portable terminal.

However, while on the one hand these systems are advantageous due to their relatively simple architecture, on the other hand they have some limitations, for example in terms of versatility.

These systems in fact normally are unable to interface with the now widespread artificial intelligence devices, so-called smart speakers, some of which are known commercially for example with the names Amazon Echo^{®} and Google Home^{®}.

Accordingly, they cannot be controlled by means of voice commands given to the virtual assistants installed in these smart speakers, specifically the ones commercially known by the names Alexa^{®} or Google Assistant^{®}.

In addition to this, it should be noted that those systems allow to control the devices that are linked to it only in the local environment, i.e., in the limited area in which the network is extended.

US2020/127374A1 discloses an antenna system, for wireless communication in luminaires, including a light source positioned at a first level within a luminaire housing. The luminaire also includes a trim component positioned at a second level of the luminaire housing different from the first level. The trim component extends into a room from a ceiling surface and includes an aperture antenna that receives wireless signals and transmits wireless signals. The luminaire includes a communication module that communicates wirelessly with one or more devices remote from the luminaire by controlling excitation of the aperture antenna.

US2019/268177A1 discloses an loT, smart home climate control and communication system including a first smart home device that receives signal sources from a wide area network, transmits signals, data and commands to one or more smart home devices in a home or building in an loT LAN. The first smart home device also receives signals, data and commands from the one or more smart home devices in the home or building on the loT LAN, and transmits signals, data and/or commands to the wide area network. The loT LAN is distinct from a residential wireless LAN.

The aim of the present invention is to provide an apparatus for the control of electrical and/or electronic devices and an associated configuration method that improve over the prior art and overcome the drawbacks of the cited prior art.

Within the scope of this aim, a particular object of the invention is to provide an apparatus and a method capable of integrating the functionalities already described in relation to control systems similar to the one commercially known by the name CASAMBI^{®}, allowing in particular to control by voice the compatible devices connected to the apparatus.

Another object of the invention is to provide an apparatus and a method that allow to easily manage the compatible devices connected to the apparatus, even from outside of the area of extension of a local network.

Another object of the invention is to provide an apparatus and a method that are capable of facilitating the quick insertion of new devices in the network, reducing the configuration burdens without however affecting the security aspects.

This aim and these objects, as well as others which will become better apparent hereinafter, are achieved by an apparatus and by a method as claimed in the appended claims.

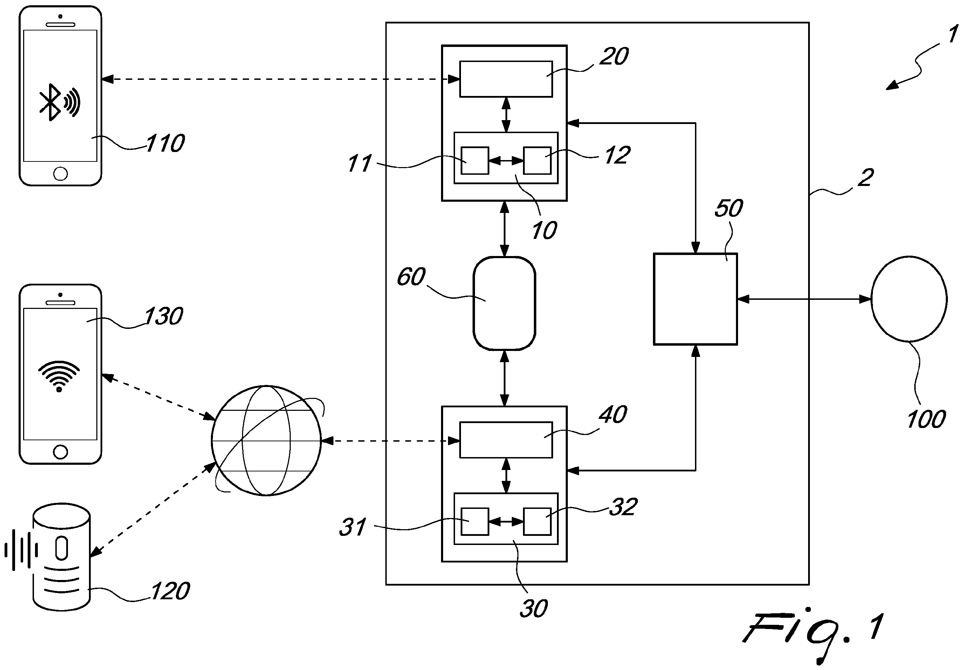

Further characteristics and advantages will become better apparent from the description of a preferred but not exclusive embodiment of an apparatus according to the invention, illustrated by way of non-limiting example in the accompanying drawings, wherein Figure 1 is a block diagram of an apparatus according to the present invention.

With reference to the cited Figure 1, an apparatus for the control of electrical and/or electronic devices is generally designated by the reference numeral 1.

The expression "electrical and/or electronic device" is understood to substantially refer to any component that uses or is involved with electric current and is suitable for use in a domotic system.

Electrical and/or electronic devices referenced in the present invention include, for example, environmental management devices, i.e., devices used for lighting, for electric power distribution and load management, for climate control, for the heating of sanitary water, for the actuation of opening and entry systems, for garden watering, and others still.

The category of electrical and/or electronic devices of interest also includes electrical household appliances, such as for example washing machines and dryers, dishwashers, cookers and ovens, refrigerators and freezers, water-sanitary devices, etc.

The range of electrical and/or electronic devices of interest also includes those suitable for communication and information, i.e., for example, telephones and similar devices, house intercoms or video house intercoms, devices for accessing the Internet and/or local networks, data transmission devices for remote control and audio-video systems for information and entertainment.

Electrical and/or electronic devices of interest also include those related to security, such as for example access management systems, systems for protection against theft or fire, video monitoring systems, remote rescue and assistance systems, and others still.

As will be evident to the person skilled in the art, however, the list of electrical and/or electronic devices given above should be considered merely exemplifying and non-limiting.

The apparatus 1 according to the present invention has a first control device 10 adapted to be operatively connected to at least one electrical and/or electronic device 100 in order to control its operation.

Figure 1 illustrates an embodiment wherein the first control device 10 is connected to a single electrical and/or electronic device 100. There may be a different number of connected electrical and/or electronic devices without thereby abandoning the scope of the present invention.

In greater detail, the first control device 10 includes a first data processing unit 11, preferably of the microprocessor type, which is operatively connected to a first memory unit 12.

The first memory unit 12 stores, for example, the application programs and the information that the first data processing unit 11 uses to control the functionalities of the first control device 10 and consequently also of the apparatus 1.

The apparatus 1 also includes a Bluetooth^{®} transmitter/receiver 20, i.e., a transceiver preset to exchange data with a local network according to the IEEE 802.15 standard.

Preferably, the local network with which the Bluetooth^{®} transmitter/receiver 20 communicates is a wireless mesh network, i.e., a wireless network constituted by multiple nodes, one of which is defined by the apparatus 1, which can act as receivers, transmitters and relays.

In this regard also, the first control device 10 and the Bluetooth^{®} transmitter/receiver 20 are preset to interact with other substantially equivalent devices connected to apparatuses substantially equivalent to the apparatus 1, which can be connected to the local network in order to control other electrical and/or electronic devices or, in an extreme case, even the electrical and/or electronic device 100 itself.

The first control device 10 and the Bluetooth^{®} transmitter/receiver 20 are functionally connected to each other and are configured to control the operation of the electrical and/or electronic device 100 on the basis of a series of manual commands, for example touch commands, which a user can give by means of a manual control device 110 connected to the local network.

Figure 1 illustrates an embodiment wherein the manual control device 110 is constituted by a smartphone, but it might consist of a different multimedia device, such as for example a smartwatch, a tablet or a handheld computer, or any other device suitable for the purpose, such as a simple Bluetooth^{®} switch, without thereby departing the scope of the present invention.

It is important to point out that in a preferred embodiment a choice has been made to use, in the apparatus 1, a control system that is already commercially available and known commercially by the name CASAMBI^{®}, which in practice incorporates the first control device 10 and the Bluetooth^{®} transmitter/receiver 20 and performs their functions.

According to the present invention, the apparatus 1 includes a second control device 30 adapted to be functionally connected to the electrical and/or electronic device 100 in order to control its operation, and a Wi-Fi transmitter/receiver 40 adapted to exchange data with the Internet.

The second control device 30 and the Wi-Fi transmitter/receiver 40 are functionally connected to each other and are configured to control the operation of the electrical and/or electronic device 100 on the basis of a series of voice commands that a user can give by means of a virtual assistant integrated in an artificial intelligence device 120 connected to the Internet.

The expression "virtual assistant" is understood substantially to indicate software capable of receiving voice commands and of responding/reacting accordingly, for example by performing given operations or providing information.

Typical examples of virtual assistants to which reference is made in the invention are the software commercially known by the names Alexa^{®} or Google Assistant^{®}, which are respectively integrated in artificial intelligence devices 120, commonly known as smart speakers, which are known commercially by the names Amazon Echo^{®} and Google Home^{®}.

Advantageously, the second control device 30 and the Wi-Fi transmitter/receiver 40 are configured to control the operation of the electrical and/or electronic device 100 also on the basis for series of manual commands, for example touch commands, which a user can give by means of a mobile device 130 connected to the Internet.

Figure 1 illustrates an embodiment wherein the mobile device 130 is constituted by a smartphone, but it might consist of a different multimedia device, such as for example a smartwatch, a tablet or a handheld computer, or any other suitable device that can be connected to the Internet, without thereby abandoning the scope of the present invention.

In Figure 1, the mobile device 130 and the manual control device 110 are shown graphically as two distinct devices, but they might also consist of the same device without thereby abandoning the scope of the present invention.

In greater detail, the second control device 30 includes a second data processing unit 31, conveniently of the microprocessor type, which is functionally connected to a second memory unit 32.

The second memory unit 32 stores, for example, the application programs and the information that the first data processing unit 31 uses to control the functionalities of the second control device 30 and consequently also of the apparatus 1.

Advantageously, the second control device 30 and the first control device 10 are functionally connected to each other so as to be able to cooperate.

The connection can occur for example by means of a control signal management device 50 of the electrical and/or electronic device 100, which can be configured appropriately.

By way of example, with particular reference to the case in which the electrical and/or electronic device 100 consists of a DALI compatible lighting device, the control signal management device 50, and preferably also the first and second control devices 10, 30, can be configured to generate control signals encoded with the DALI protocol.

In this regard also, the apparatus 1 includes an input/output module 60 which is designed to receive configuration data which can be set by an operator as a function of the specific requirements.

By means of the apparatus 1 it is in fact possible to control multiple electrical and/or electronic devices, in the specific case up to sixty-four, which according to the various configurations can be controlled individually or divided into a certain number of groups, in the specific case up to eight.

Advantageously, the apparatus 1 is provided with a containment structure 2 adapted for installation on rails of lighting systems, such as for example the ones known commercially by the names MULTISYSTEM^{®} and MULTISYSTEM^{®} EVO.

In order to configure the apparatus 1 and render its operating logic suitable to manage DALI compatible electrical and/or electronic devices, it is also possible to use a configuration method which is also a subject matter of the present invention.

It is important to point out that this configuration method does not provide for the entry of configuration data by an operator via the input/output module 60 and therefore it can be performed by the user himself and does not require the intervention of specialized personnel.

The configuration method according to the invention provides first of all for disconnecting the power supply of the apparatus 1.

Once the power has been disconnected, a DALI compatible electrical and/or electronic device, for example the device 100, is connected to the apparatus 1.

Then the apparatus 1 is supplied with power for a minimum assignment time, which in the specific case has been quantified as approximately 5 seconds.

During this time interval, the apparatus 1 assigns to the electrical and/or electronic device an address within a group.

In order to assign to another electrical and/or electronic device an address within a successive group, it is sufficient to repeat the described operations again, keeping the electrical and/or electronic devices assigned to the last group connected to the apparatus 1.

For example, in order to clarify how the configuration according to the method of the invention occurs, consider starting from an initial situation in which as yet no electrical and/or electronic device is connected to the apparatus 1 and the power supply of the latter is disconnected.

A first electrical and/or electronic device, for example the device 100, is connected to the apparatus 1 and then the latter is supplied with power for the minimum assignment time.

In this manner, an address that belongs to group zero is assigned to the first electrical and/or electronic device.

One then proceeds by again disconnecting the power supply and connecting a second electrical and/or electronic device to the apparatus 1, keeping in any case the first electrical and/or electronic device, to which an address belonging to group zero had been assigned, connected.

At this point it is possible to again supply power to the apparatus 1 for the minimum assignment time.

In this manner, an address that belongs to group one is assigned to the second electrical and/or electronic device.

The procedure is then repeated for each one of the electrical and/or electronic devices that must be connected to the apparatus 1.

In the specific case, since the provided groups are eight, any ninth electrical and/or electronic device is assigned an address that belongs to group zero, any tenth electrical and/or electronic device is assigned an address that belongs to group one, and so forth.

In order to assign to another electrical and/or electronic device an address within the last group, instead, it is sufficient to repeat again the operations described earlier, disconnecting from the apparatus 1 the electrical and/or electronic devices assigned to the last group.

For example, in order to further clarify how the configuration according to the method according to the invention occurs, consider starting once again from an initial situation in which as yet no electrical and/or electronic device is connected to the apparatus 1 and the power supply of the latter is disconnected.

A first electrical and/or electronic apparatus, for example the device 100, is connected to the apparatus 1 and then the latter is supplied with power for the minimum assignment time.

In this manner, an address that belongs to group zero is assigned to the first electrical and/or electronic device.

One then proceeds by again disconnecting the power supply and connecting to the apparatus 1 a second electrical and/or electronic device, after disconnecting the first electrical and/or electronic device to which an address belonging to group zero had been assigned.

At this point it is possible to again supply power to the apparatus 1 for the minimum assignment time.

In this manner, the second electrical and/or electronic device also is assigned an address that belongs to group zero.

The procedure is then repeated for each one of the electrical and/or electronic devices that must be connected to the apparatus 1.

If one wishes to program multiple electrical and/or electronic devices to group one, it is necessary to keep an electrical and/or electronic device already programmed to group zero always connected to the apparatus 1 and to repeat the operation described above for all the electrical and structural electronic devices to be programmed to group one.

The apparatus according to the invention can be operated intuitively and very simply.

The electrical and/or electronic device 100 and any other devices that might be configured according to one of the manners described above are connected to the apparatus 1.

When the apparatus 1 is configured correctly, it is possible to control the operation of the electrical and/or electronic device 100 and of any other appliances in various manners.

A first manner entails a series of manual commands, for example touch commands, to be given to the apparatus 1 by means of a manual control device 110 connected to the local network.

It is however even easier to give the apparatus 1 a series of voice commands by means of a voice assistant, such as for example one among those known commercially by the names Alexa^{®} or Google Assistant^{®}, integrated in an artificial intelligence device 120, i.e., in a smart speaker, such as for example one of those commercially known by the names Amazon Echo^{®} and Google Home^{®}, connected to the Internet.

Another possibility is to give the apparatus 1 a series of manual commands, for example touch commands, by means of a mobile device 130 connected to the Internet.

In practice it has been found that the invention achieves the intended aim and objects, providing an apparatus for controlling a lighting system and an associated configuration method which allow to integrate the functionalities already described in relation to control systems similar to the one known commercially by the name CASAMBI^{®}.

In particular, the apparatus and the method according to the invention allow to control the compatible devices connected to the apparatus with various types of commands, primarily voice commands.

Also, the apparatus and the method according to the invention allow to control the compatible devices connected to the apparatus with manual commands which are given by means of portable terminals, such as for example a smartphone, which can be located equally within or outside of the extension area of the local network.

In the first case it is possible to use the Bluetooth^{®} protocol, while in the second case it is possible to use a Wi-Fi protocol and pass through a connection to the Internet.

Another great advantage of the apparatus and method according to the invention resides in that they facilitates the quick insertion of new devices in the network, making this operation executable even by non-specialized personnel and accordingly reducing configuration burdens.

The materials used, as well as the dimensions and shapes, may of course be any according to the requirements and the state of the art.

## Claims

1. An apparatus for controlling electrical and/or electronic devices, comprising a first control device adapted to control the operation of at least one electrical and/or electronic device, said first control device being operatively connected to a Bluetooth^{®} transmitter/receiver adapted to exchange data with a local network; said first control device and said Bluetooth^{®} transmitter/receiver being configured to control the operation of said electrical and/or electronic device on the basis of manual commands given by a user by means of a manual control device connected to said local network; a second control device being adapted to control the operation of said electrical and/or electronic device, said second control device being operatively connected to a Wi-Fi transmitter/receiver adapted to exchange data with the Internet, said second control device and said Wi-Fi transmitter/receiver being configured to control the operation of said electrical and/or electronic device on the basis of voice commands given by a user by means of a virtual assistant integrated into an artificial intelligence device connected to the Internet; said first control device being operatively connected to said second control device by means of a control signal management device; said control signal management device being operatively connected to said electrical and/or electronic device; said apparatus being **characterized in that** said first and second control devices and said control signal management device are configured to generate control signals encoded with the DALI protocol, said electrical and/or electronic device being DALI compatible.

2. The apparatus according to the preceding claim, **characterized in that** said second control device and said Wi-Fi transmitter/receiver are configured to control the operation of said electrical and/or electronic device on the basis of manual commands given by a user by means of a manual control device connected to the Internet.

3. The apparatus according to one or more of the preceding claims, **characterized in that** said first and second control devices comprise a first and a second data processing unit, respectively, which are operatively connected to a first and a second memory unit, respectively.

4. The apparatus according to one or more of the preceding claims, **characterized in that** it comprises an input/output module configured to receive configuration data of said apparatus, said configuration data being settable by an operator.

5. The apparatus according to one or more of the preceding claims, **characterized in that** said first control device and said Bluetooth^{®} transmitter/receiver are configured to interact with other substantially equivalent devices related to other apparatuses that are substantially equivalent to said apparatus, said other apparatuses being connected to said local network and being adapted to control other electrical and/or electronic devices.

6. The apparatus according to one or more of the preceding claims, **characterized in that** it comprises a container structure adapted to be installed on lighting system tracks.

7. The apparatus according to one or more of the preceding claims, **characterized in that** said electrical device belongs to the group constituted by: environment management devices, electrical household appliances, communication and information devices, safety devices.

8. A method of configuration of an apparatus for controlling electrical and/or electronic devices, said apparatus being according to one or more of the preceding claims, said method being **characterized in that** it comprises the steps of:
a) disconnecting the power supply of said apparatus;
b) connecting a DALI compatible electrical and/or electronic device to said apparatus;
c) supplying power to said apparatus for a minimum allocation time;
d) assigning, on the part of said apparatus, an address that is within a group to said electrical and/or electronic device.

9. The method according to the preceding claim, **characterized in that** the steps from a) to d) are repeated, keeping the electrical and/or electronic devices assigned to the last group connected to said apparatus, in order to assign and address within a subsequent group to another electrical and/or electronic device.

10. The method according to one or more of the preceding claims, **characterized in that** the steps from a) to d) are repeated, disconnecting the electrical and/or electronic devices assigned to the last group from said apparatus, in order to assign an address within said last group to another electrical and/or electronic device.
